Europäisches Patentamt

European Patent Office

Office européen des brevets

(19)

(11) **EP 1 111 358 A2**

(12) **EUROPÄISCHE PATENTANMELDUNG**

(43) Veröffentlichungstag:
   **27.06.2001 Patentblatt 2001/26**

(51) Int Cl.⁷: **G01L 3/12**

(21) Anmeldenummer: **00126913.3**

(22) Anmeldetag: **08.12.2000**

| | |
|---|---|
| (84) Benannte Vertragsstaaten:<br>**AT BE CH CY DE DK ES FI FR GB GR IE IT LI LU MC NL PT SE TR**<br>Benannte Erstreckungsstaaten:<br>**AL LT LV MK RO SI** | (72) Erfinder:<br>• **Grothaus, Arnold**<br>  **73433 Aalen (DE)**<br>• **Krettler, Georg**<br>  **45768 Marl (DE)**<br>• **Porth, Wolfgang**<br>  **60388 Frankfurt (DE)** |
| (30) Priorität: **23.12.1999 DE 19962525** | |
| (71) Anmelder: **Mannesmann VDO Aktiengesellschaft**<br>**60388 Frankfurt am Main (DE)** | (74) Vertreter: **Rassler, Andrea, Dipl.-Phys.**<br>**Kruppstrasse 105**<br>**60388 Frankfurt (DE)** |

(54) **Optischer Drehmomentsensor**

(57)    Die Erfindung betrifft einen Drehmomentesensor zum Messen des Betrages eines Drehmomentes, der auf einem Torsionselement (3) mit einer drehbaren Welle (4) aufgebracht wird.

Bei einem Sensor für die Messung des Winkelversatzes bzw. des Drehmomentes für ein servounterstütztes Lenksystem, der einfach herstellbar ist und trotzdem zuverlässige und genaue Messergebnisse liefert, ist jeweils eine, eine umlaufende periodische Randform aufweisende Scheibe (1, 2), die mit der Welle (4) oberhalb bzw. unterhalb des Torsionselementes (3) verbunden ist, in einem Bereich des die periodische Randform aufweisenden äußeren Randes der Scheibe von jeweils einer Beleuchtungseinrichtung (6, 10) beleuchtbar, wobei eine aus mehreren Sensoren (11) bestehende Sensoreinrichtung zur Bestimmung des Beleuchtungsgrades unter jedem Scheibenrand (1, 2) angebracht ist und zeitgleich je ein Phasenwinkel der jeweiligen Randstruktur zur Sensoreinrichtung bestimmt wird und die Differenz der Drehwinkel der Scheiben (1, 2) zueinander ermittelt wird.

Fig. 2

**Beschreibung**

Die Erfindung betrifft einen optischen Drehmomentesensor für die Einbeziehung in hilfskraftunterstützte Lenkungssysteme in Fahrzeugen gemäß dem Oberbegriff des Patentanspruchs 1.

Ein optischer Drehmomentesensor der oben genannten Art ist aus der EP 555 987 B1 bekannt. Er wird bei einer hilfskraftunterstützten Fahrzeuglenkung eingesetzt. Er ist zwischen einem Lenkrad und einem Lenkgetriebe angeordnet. Die Signalgeber arbeiten optisch. Eine Lichtquelle strahlt durch eine Blendenanordnung auf einen photoelektrischen Bereich, der am Ende eines Torsionsstabes angeordnet ist. Die Blendenanordnung ist mit dem anderen Ende des Torsionsstabes verbunden. Wenn ein Drehmoment aufgebracht wird, verschiebt sich die Blende gegenüber den photoelektrischen Aufnehmern, so daß der erste Aufnehmer eine größere Lichtmenge und der zweite Aufnehmer eine kleinere Lichtmenge als in der Neutralstellung erhält. Die Aufnehmereinrichtung ist winkelbeweglich.
Eine der verwendeten Masken enthält einen äußeren Bogen von im Winkelabstand getrennten Öffnungen und einen radial versetzten inneren Bogen von im Winkelabstand getrennten Öffnungen.

In der DE 198 01 569 A 1 wird ein aufwendiger Drehmomentesensor zum Messen des Betrages eines Drehmomentes beschrieben, der auf eine segmentierte drehbare Welle aufgebracht wird. Das Messen der Winkelverschiebung zwischen einem ersten Wellensegment und einem zweiten Wellensegment, die über eine nachgiebige Torsionsstange miteinander verbunden sind, erfolgt durch Beobachten der relativen Winkelposition der Wellensegmente. Antriebsblöcke weisen radial ausgerichtete innere Antriebsschlitze und zylindrische Antriebsstifte auf, die die zwei unabhängige Kontaktträger antreiben.

Der Erfindung liegt die Aufgabe zugrunde, einen Sensor für die Messung des Winkelversatzes bzw. des Drehmomentes für ein servounterstütztes Lenksystem anzugeben, der einfach herstellbar ist und trotzdem zuverlässige und genaue Meßergebnisse liefert.

Erfindungsgemäß wird die Aufgabe dadurch gelöst, jeweils eine, eine umlaufende periodische Randform aufweisende Scheibe, die mit der Welle oberhalb und unterhalb des Torsionselementes verbunden ist und in einem Bereich des die periodische Randform aufweisenden äußeren Randes der Scheiben von jeweils einer Beleuchtungseinrichtung beleuchtbar ist, wobei eine aus mehreren Sensoren bestehende Sensoreinheit zur Bestimmung des Beleuchtungsgrades unter jedem Scheibenrand angebracht ist und zeitgleich je ein Phasenwinkel der jeweiligen Randstruktur zur Sensoreneinrichtung bestimmt und die Differenz der Drehwinkel der Scheiben zueinander ermittelt wird.

Der Vorteil der Erfindung besteht darin, dass keine elektrischen Teile auf der Welle angeordnet sind. Die Torsionscheiben sind starr und somit erschütterungsbeständig angeordnet, was für den Einsatz im Kraftfahrzeug von besonderer Bedeutung ist, da dadurch ein genaues Meßergebnis erzielt wird.

In einer Ausgestaltung sind die Sensoren über die Länge einer Randperiode angeordnet, wodurch sich das Differenzsignal einfach auswerten läßt

Eine mehrkanalige Auswertung des Meßsignales ist einfach möglich, wenn als Sensoren vier Photodioden über die Länge einer Randperiode angeordnet sind, wobei die Ausgangssignale immer zweier Photodioden ein Differenzsignal bilden. Die Verwendung zweier solcher Diodenpaare bilden ein redundantes System.

Die Meßanordnung ist vorteilhafterweise auch mit drei Photodioden möglich, welche ebenfalls über die Länge einer Randperiode verteilt sind.

In einer Weiterbildung der Erfindung sind zur Verlängerung der Meßstrecke entlang der Randkontur der Scheiben n Sensoren angeordnet.

Vorteilhafterweise ist der periodische Scheibenrand um einen mittleren Radius mit einer Funktion, die den Abstand eines Punktes vom Mittelpunkt der Scheibe in Abhängigkeit vom Drehwinkel gegenüber einer Startposition nach einer Funktion gemäß $r = r_m + A \cdot \sin(n \cdot \varphi)$ berechnet, gebildet.

Die Kalibrierung der Meßkanäle erfolgt über eine Kalibriereinrichtung, welche mit den Photodioden verbunden ist und die über einen vorgegebenen Zeitraum die in den einzelnen Meßkanälen auftretenden Maximal- bzw. Minimalwerte erfaßt und daraus einen Kalibrierwert ermittelt.

Zur Phasensprungvermeidung ist eine Kontrollvorrichtung vorgesehen, welche zur Plausibilitätsprüfung die aktuell ermittelte Differenz zwischen den Phasenwinkeln der beiden Scheiben mit einer vorher bestimmten Differenz vergleicht.

Zur Vermeidung von Rauschsignalen sind Auslesevorrichtungen vorhanden, die ein Auslesen der einzelnen Meßkanäle gleichzeitig ermöglichen.

Die Erfindung läßt zahlreiche Ausführungsformen zu. Eine davon soll anhand der in der Zeichnung dargestellten Figuren näher erläutert werden.

Es zeigt

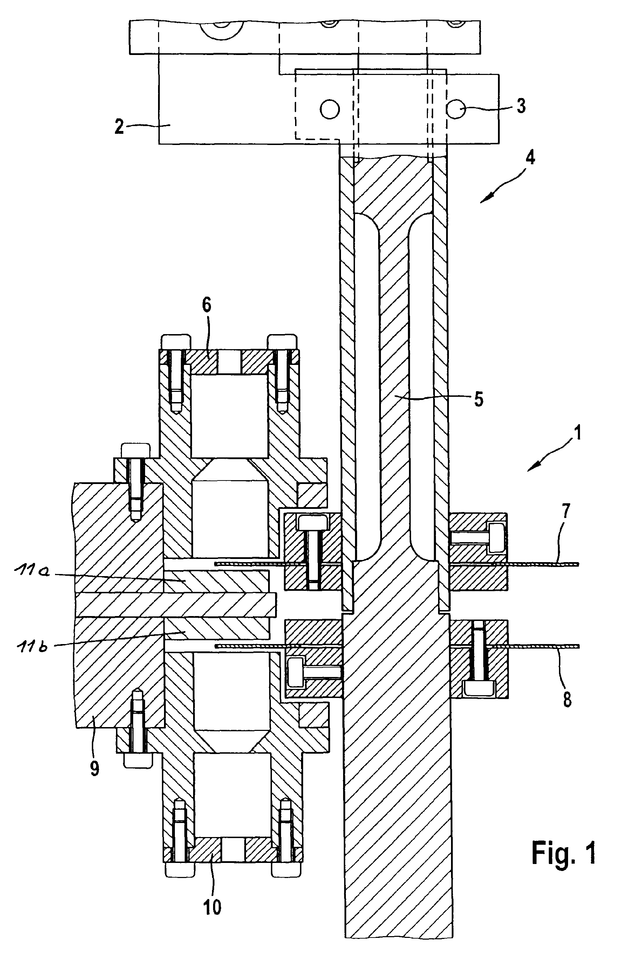

Fig. 1    eine schematische Querschnittsansicht des mechanischen Aufbaus eines Drehmomentesensors
Fig. 2    erfindungsgemäß ausgebildete Scheibenform mit Anordnung der Photodioden

Ein Drehmomentesensor 1 ist im vorliegenden Ausführungsbeispiel auf einer Lenksäule 2 eines Kraftfahrzeuges montiert, die hier nur ausschnittsweise dargestellt ist. Zwischen Lenkhandrad und Lenkgetriebe ist ein Torsionselement 4 mit einer Meßwelle 5 angeordnet. Wenn die Lenksäule 2 vom Lenkhandrad mit einem Drehmoment beaufschlagt wird, dann verdrillt sich die Meßwelle 5.

Am Torsionselement 4 sind zwei identisch aufgebauten Sensoreinrichtungen angeordnet. Jede Sensoreinrichtung weist eine Scheibe 7 bzw. 8 auf, denen jeweils eine Beleuchtungseinrichtung 6 bzw. 10 zugeordnet ist. Die Beleuchtungseinrichtung ist dabei so angeordnet, dass ihre Strahlrichtung senkrecht zur radialen Ausdehnung der Scheibe 7 bzw. 8 verläuft. Dabei wird durch die Beleuchtungseinrichtung 6 bzw. 10 der äußere Rand der Scheibe 7 und 8 ausgeleuchtet. Die Beleuchtungseinrichtungen 6 und 10 sind gemeinsam mit Photodioden 11a bzw. 11b an einer Halterung 9 befestigt. Die Photodioden 11a bzw. 11b sind dabei so angeordnet, dass sie den von einer Beleuchtungseinrichtung 6 bzw. 10 ausgesandten und von der Scheibe unterbrochenen Strahl detektieren. Dabei ist die Scheibe 7 zwischen Beleuchtungseinrichtung 6 und Photodioden 11a angeordnet, während die Scheibe 8 zwischen der Beleuchtungseinrichtung 10 und den Photodioden 11b geführt ist. Die Scheibe 8 ist mit der Welle 5 des Torsionselementes 4 verbunden, während die Scheibe 7 außerhalb der Welle 5 am Torsionselemente 4 befestigt ist.

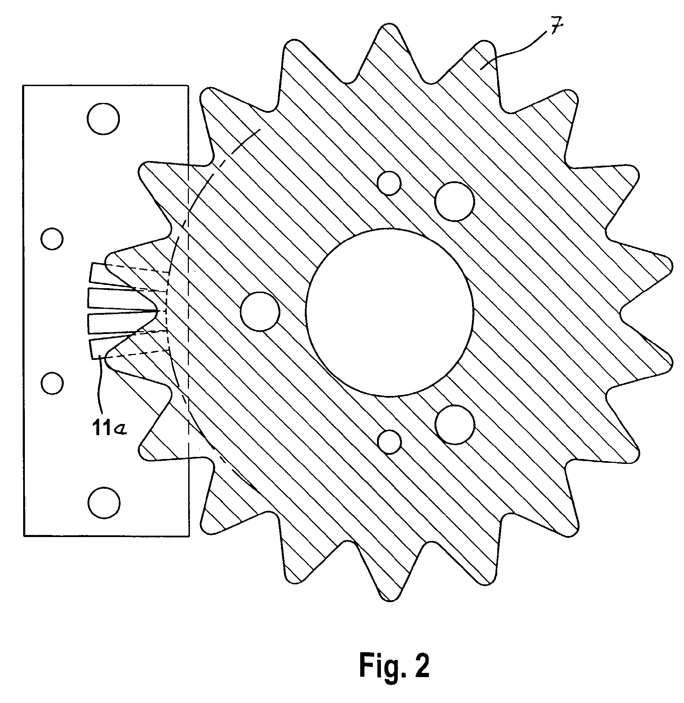

Wie aus Fig. 2 ersichtlich, ist der äußere Rand der Scheiben 7, 8 mit einer umlaufenden periodischen Randform versehen.
Durch Abtastung dieser Randform mit Hilfe von jeweils vier Photodioden 11a, 11b wird über die Stellung der Scheiben 7, 8 eine Aussage bezüglich der feststehenden Photodioden gemacht. Es wird die Differenz der Drehwinkel der Scheiben 7, 8 zueinander ermittelt.
Dazu werden, basierend auf der periodischen Formgebung des Randes der Scheiben 7, 8 zeitgleich je ein Phasenwinkel der jeweilige Randstruktur zur Sensoreneinrichtung bestimmt.

Aus der Differenz dieser Phasenwinkel, unter dem die beiden Scheiben 7, 8 zu einem bestimmten Zeitpunkt stehen, läßt sich die Verdrehung des Torsionselementes und damit das Drehmoment bestimmen.

Der Scheibenrand pendelt um einen mittleren Radius mit einer Funktion, die den Abstand eines Punktes vom Mittelpunkt der Scheibe in Abhängigkeit vom Drehwinkel gegenüber einer Startposition nach der Funktion gemäß

$$r = rm + A \cdot \sin(n \cdot \varphi),$$

wobei rm der mittlere Radius,
A die Amplitude der Randauslenkung und
n die Anzahl der Perioden auf dem Umfang ist.

Für die Berechnung der Phasenlage wird als Beispiel die Anordnung mit vier Sensoren gewählt.
Es wird eine Helligkeitsverteilung angenommen, die in $\varphi$- Richtung gemäß einer harmonischen Funktion mit der Periodenlänge $2\pi$ schwankt. In der vorliegenden Anordnung wird diese Helligkeitsverteilung durch eine mehr oder weniger starke Abdeckung der ansonsten gleichmäßig beleuchteten Sensorenflächen durch den Rand der darüberliegenden Scheibe dargestellt. Werden nun die vier Sensoren so angeordnet, daß ihr Abstand jeweils ein Viertel der Periodenlänge der Randform, also $\pi/2$ entspricht, ergeben sich die Signale S1 bis S4 der einzelnen Sensoren entsprechend den folgenden Gleichungen

$$Gl.1 \qquad S1 = k + A \cdot \sin(\varphi)$$

$$Gl.2 \qquad S2 = k + A \cdot \sin(\varphi + \tfrac{1}{2} \pi)$$

$$Gl.3 \qquad S3 = k + A \cdot \sin(\varphi + \pi)$$

$$Gl.4 \qquad S4 = k + A \cdot \sin(\varphi + 3/2\, \pi)$$

Hier ist k die Mitte, um die das Signal pendelt. K ist ein konstanter Gleichspannungsanteil der Signalspannungen und A ist die Amplitude, mit der die Signalspannungen bei Verschiebung der Anordnung gegnüber der Helligkeitsverteilung bzw. Randform schwanken.

Die Differenzbildung von Gl.1 - Gl.3 und Gl.2 - Gl.4 ergibt:

$$\text{Gl.5} \qquad S1 - S3 = A \cdot [\sin(\varphi) - \sin(\varphi + \pi)]$$

und

$$\text{Gl.6} \qquad S2 - S4 = A \cdot [\sin(\varphi + \tfrac{1}{2} \cdot \pi) - \sin(\varphi + 3/2 \cdot \pi]$$

Nach Additionstheoremen $(\sin(\alpha \pm \beta) = \sin\alpha \cdot \cos\beta \pm \sin\beta \cdot \cos\alpha)$ folgt schließlich:

$$\text{Gl.7} \qquad S1 - S3 = 2 \cdot A \cdot \sin(\varphi)$$

$$\text{Gl.8} \qquad S2 - S4 = 2 \cdot A \cdot \cos(\varphi)$$

Für die Division ergibt sich:

$$\text{Gl.9} \qquad (S1 - S3) / (S2 - S4) = \sin(\varphi) / \cos(\varphi) = \tan(\varphi)$$

Daraus folgt:

$$\Leftrightarrow \varphi = \arctan[(S1 - S3) / (S2 - S4)]$$

Mit Kenntnis der Differenz der Signale S1 und S3 bzw. S2 und S4 ist es möglich, über die Arcusfunktion einen Winkel für die Phasenlage der Sensorenanordnung gegenüber der Helligkeitsverteilung zu errechnen. Unter Berücksichtigung der Vorzeichen von Sinus $(\varphi)$ und Cosinus $(\varphi)$ kann über eine quadrantengerechte Auswertung eine Phasenlage von $-\pi$ bis $+\pi$ angegeben werden.

Analog dazu werden die Signale S5 und S8 für die zweite Sensorenanordnung ermittelt und verrechnet.

Für die Auflösung des Gleichungssystems ist es jedoch erforderlich, daß die Amplitude A und das Grundniveau k für jeweils alle vier Meßkanäle gleich sind.

Dies kann in gewissen Grenzen durch eine geeignete Kalibrierung der Meßkanäle erreicht werden. Ist der Gleichlauf der Meßkanäle bereits ohne Kalibrierung erreicht, kann die Differenzbildung bereits analog erfolgen.

Dazu sind die Amplituden und das Grundniveau zu bestimmen und die gemessenen Werte sind dann entsprechend zu korrigieren.

Es ist zu beachten, daß es bei der laufenden Bestimmung des Phasenwinkels zu Sprüngen der errechneten Werte kommen kann, wenn die eine oder die andere Scheibe das Ende bzw. den Anfang der ihr eigenen Periode überstreicht. Hier ist in der Datenverarbeitung eine Kontrolle vorzusehen, die einen solchen Sprung als unsinnig erkennt und durch geeignete Maßnahmen herausrechnet.

Eine solche Kontrolle kann bezogen auf die vorliegende Erfindung durch einen Vergleich des aktuellen erechneten Wertes für die Differenz zwischen den Phasenwinkeln der beiden Scheiben mit dem vorausgegangenen Wert erfolgen. Ist die Differenz kleiner als $-\pi$, erfolgt zur Korrektur eine Addition von $2\pi$, ist die Differenz größer als $+\pi$, erfolgt zur Korrektur eine Subtraktion von $2\pi$.

Bei den durchzuführenden Messungen kann es zu störendem Rauschen der Meßkanäle kommen. Zur Glättung der Kanäle ist eine laufende Mittelwertbildung eingesetzt, die bei ausreichend hoher Auslesefrequenz die Funktion der Einrichtung nicht stört. Es werden dazu z.B. die letzten zwanzig Werte gespeichert. Mit jedem neuen Wert fällt dann der jeweils ältere Wert aus der Berechnung heraus.

Die Auslesung der einzelnen Meßkanäle erfolgt gleichzeitig, da es durch eine Zeitverzögerung zu einer Verfälschung des Meßwertes kommen könnte.

Für die Kalibrierung der Meßkanäle ist eine Software in solcher Art angeordnet, daß diese über einen gewissen Zeitraum die auftretenden Maximal- und Minimalwerte der einzelnen Känäle erfaßt und für eine Verarbeitung zur Verfügung hält.

Die Kalibrierungsberechnung lautet dann:

$$S = (\text{Signal} - \text{Min}) / (\text{Max} - \text{Min}).$$

Bezugszeichen

| 1 | Drehmomentesensor |
|---|---|
| 2 | Lenksäule |
| 3 | Schrauben |
| 4 | Torsionselement |
| 5 | Meßwelle |
| 6 | Beleuchtungseinrichtung 1 |
| 7 | Scheibe 1 |
| 8 | Scheibe 2 |
| 9 | Halterung |
| 10 | Beleuchtungseinrichtung 2 |
| 11 | Photodioden |

**Patentansprüche**

1. Optischer Drehmomentesensor zum Messen des Betrages eines Drehmomentes, das auf ein Torsionselement (3) mit einer drehbaren Welle (4) aufgebracht wird, **dadurch gekennzeichnet**, daß jeweils eine, eine umlaufende periodische Randform aufweisende Scheibe (1; 2), die mit der Welle (5) oberhalb bzw. unterhalb des Torsionselementes (4) verbunden ist, in einem Bereich des die periodische Randform aufweisenden äußeren Randes der Scheiben (1; 2) von jeweils einer Beleuchtungseinrichtung (6, 10) beleuchtbar ist, wobei eine aus mehreren Sensoren (11) bestehende Sensoreinrichtung zur Bestimmung des Beleuchtungsgrades unter jedem Scheibenrand (1,2) angebracht ist und zeitgleich je ein Phasenwinkel der jeweiligen Randstruktur zur Sensoreneinrichtung bestimmt wird und die Differenz der Drehwinkel der Scheiben (1,2) zueinander ermittelt wird.

2. Drehmomentesensor nach Anspruch 1, **dadurch gekennzeichnet,** daß die Sensoren (11) über die Länge einer Randperiode angeordnet sind.

3. Drehmomentesensor nach Anspruch 1, **dadurch gekennzeichnet,** daß als Sensoren vier Photodioden (11) über die Länge einer Randperiode angeordnet sind.

4. Drehmomentesensor nach Anspruch 1, **dadurch gekennzeichnet,** daß als Sensoren drei Photodioden (11) angeordnet sind.

5. Drehmomentesensor nach Anspruch 1, dadurch gekennzeichnet, daß zur Verlängerung der Meßstrecke entlang der Randkontur der Scheiben (7,8) n-Anzahl Sensoren (11) angeordnet sind.

6. Drehmomentesensor nach Anspruch 1, dadurch gekennzeichnet, daß der Scheibenrand um einen mittleren Radius mit einer Funktion, die den Abstand eines Punktes vom Mittelpunkt der Scheibe in Abhängigkeit vom Drehwinkel gegenüber einer Startposition nach einer Funktion gemäß $r = r_m + A \cdot \sin(n \cdot \varphi)$ berechnet, angeordnet ist.

7. Drehmomentesensor nach Anspruch 1, dadurch gekennzeichnet, daß zur Kalibrierung der Meßkanäle eine Software angeordnet ist.

8. Drehmomentesensor nach Anspruch 1, dadurch gekennzeichnet, daß zur Phasensprungvermeidung eine Kontrollvorrichtung angeordnet ist.

9. Drehmomentesensor nach Anspruch 1, dadurch gekennzeichnet, daß zur Vermeidung von Rauschen Auslesevorrichtungen, die ein Auslesen der einzelnen Meßkanäle gleichzeitig ermöglichen, angeordnet sind.

Fig. 1

11a

7

**Fig. 2**